# EUROPÄISCHE PATENTANMELDUNG

(11) **EP 1 617 547 A1**
(43) Veröffentlichungstag der Anmeldung: **18.01.2006**
(21) Anmeldenummer: 04016408.9
(22) Anmeldetag: 13.07.2004
(51) Int. Cl.: H02K 44/08

(54) **Strömungsmachine und Verfahren zum Betrieb einer Strömungsmachine**

(71) Anmelder: SIEMENS AKTIENGESELLSCHAFT, 80333 München (DE)
(72) Erfinder: Haje, Detlef, Dr., 46236 Bottrop (DE)

(57) **Zusammenfassung**

Die Erfindung betrifft eine Strömungsmaschine (1) mit einem Strömungskanal (2) und einem Magneten (3) zum Erzeugen eines vorgebbaren Magnetfeldes (B) wenigstens in einem Abschnitt des Strömungskanals (2), wobei in dem Abschnitt des Strömungskanals (2) ein elektrischer Leiter (4) derart positioniert ist, dass bei einer zeitlichen Änderung des Magnetfeldes (B) am Ort des Leiters in dem Leiter (4) eine elektrische Spannung induzierbar ist.

## Beschreibung

Die Erfindung betrifft eine Strömungsmaschine mit einem Strömungskanal und einem Magneten zum Erzeugen eines vorgebbaren Magnetfeldes (B) wenigstens in einem Abschnitt des Strömungskanals. Die Erfindung betrifft weiterhin ein Verfahren zum Betrieb einer Strömungsmaschine mit einem Strömungskanal

Es sind Strömungsmaschinen bekannt, beispielsweise konventionelle Dampfturbinen oder Gasturbinen, bei deren Bauform üblicherweise die Energieumwandlung mittels so genannter Schaufelgitter oder Schaufelräder erfolgt, die bei Durchströmen der Strömungsmaschine mit einem Aktionsfluid, z. B. Dampf oder Heißgas, den Rotor der Strömungsmaschine antreiben. Die dabei zum Einsatz kommenden Schaufelgitter haben die Funktion, in dem strömenden Aktionsfluid Druckenergie in kinetische Energie umzuwandeln sowie kinetische Energie in mechanische Energie umzusetzen. Diese Schaufelgitter werden üblicherweise als am Rotor befestigte Laufschaufelgitter oder als Leitschaufelgitter im Gehäuse ausgeführt.

Für die Auslegung derartiger Schaufelgitter ist insbesondere bei hohen Temperaturen des durch den Strömungskanal strömenden Aktionsfluid neben der Strömungsoptimierung insbesondere die Festigkeit, beispielsweise von Schaufel und Schaufelbefestigung, zu beachten. Besondere Bedeutung besitzt dabei, dass die Festigkeitskennwerte der eingesetzten Hochtemperatur-Werkstoffe mit hohen Temperaturen deutlich abnehmen. Eine höhere Prozesstemperatur wird aber generell angestrebt, da hiermit eine Steigerung des thermodynamischen Wirkungsgrades der Strömungsmaschine verbunden ist. Dieser Einfluss der hohen Betriebstemperatur auf die Festigkeitskennwerte der eingesetzten Werkstoffe gilt ebenfalls für die Rotoren thermischer Turbomaschinen. Hierbei ist neben den Schaufeln der Rotor eines der höchst beanspruchten Bauteile, insbesondere, da er bei Vorhandensein hoher Materialtemperaturen erheblichen Fliehkräften ausgesetzt ist. Rotorfliehkräfte wirken dabei sowohl auf die Rotorwelle als auch auf die Laufschaufeln, die an der Umfangsfläche der Rotorwelle angeordnet sind. Darüber hinaus sind weitere Hochtemperatur-Einwirkungen auf Schaufeln oder Rotoren zu verzeichnen. Beispielhaft sei hier etwa auf die Hochtemperatur-Korrosion oder -oxidation hingewiesen. Schaufeln für extrem hohe Anwendungstemperaturen wie beispielsweise Gasturbinenschaufeln, werden daher teilweise aus einkristallinen Werkstücken hergestellt und bedürfen aufgrund der hohen Temperaturen des Aktionsfluids, z. B. des Heißgases, einer erheblichen Kühlung. Dazu wird ein Kühlmittelmassenstrom bereitgestellt, welcher im Falle einer Gasturbine beispielsweise einen der Gasturbine vorgeschalteten Verdichter als Verdichterentnahmeluft entnommen wird, die durch ein kompliziertes Kanal- und Bohrungssystem im Inneren einer Hohlschaufel zur Kühlung der Schaufel geführt wird (Drall-, Prall- oder Filmkühlung). Zusätzlich benötigen derartige Schaufeln für den Hochtemperatureinsatz in heißen, aggressiven Medien Wärmedämmschichten für die Wärmeisolation sowie Korrosionsschutzschichten. Dabei sind bei Gasturbinen Turbineneinsatztemperaturen des Heißgases von 1200°C und darüber hinaus möglich. Bei Dampfturbinen betragen die typischen Prozessdaten etwa zwischen 540°C bis 600°C für die Frischdampftemperatur bei etwa 250 bis 300 bar Frischdampfdruck des einer konventionellen Hochdruck-Teilturbine zugeführten Dampfes.

Die Umwandlung von Druckenergie in kinetische Energie sowie kinetische Energie in mechanische Energie unter Verwendung von Leitschaufelgittern und Laufschaufelgittern mit einer konventionellen Beschaufelung weisen daher gewisse Nachteile auf. Die Schaufeln besitzen naturgemäß fertigungsbedingt eine gewisse Wandstärke bzw. Dicke, die den effektiven Strömungsquerschnitt des Strömungskanals reduzieren. Dieser Effekt wird auch als Versperrungseffekt bezeichnet. Des Weiteren kann durch die endliche Schaufelzahl keine optimale homogene Umlenkung des Aktionsfluids erfolgen. Daneben besitzen Schaufelgitter einen Strömungswiderstand, d.h. es bilden sich Grenzschichten an den Schaufeln aus, die zu Sekundärverlusten in den nachfolgenden Schaufelgittern führen und beispielsweise bei Verdichtern in Verbindung mit einer zusätzlichen Fehlanströmung im Extremfall sogar eine Versperrung verursachen können. Wie bereits weiter oben diskutierte, sind aufgrund des Einsatzes von hochwertigen Hochtemperatur-Werkstoffen wegen der erhöhten Material und Fertigungskosten Schaufeln für den Einsatz in Hochtemperatur-Anwendungen sehr teuer und in ihrer Festigkeit begrenzt. Aufgrund der Festigkeitsgesichtspunkte bei den hohen Fliehkraftbelastungen von Laufschaufeln ist die Höhe der Schaufeln, d.h. die maximale Schaufelblattlänge, begrenzt. Im Falle eines Versagens einer Schaufel, beispielsweise infolge eines Ablösens vom Rotor aufgrund einer Überschreitung der maximal zulässigen Fliehkraftbelastung, können erhebliche Folgeschäden in der Strömungsmaschine auftreten. So können z.B. in einer axialen Strömungsmaschine insbesondere die in Strömungsrichtung des Aktionsfluids angeordneten nachfolgenden Schaufelgitter zerstört werden. Ein weiterer Nachteil der bekannten Beschaufelungen ist auf die stets auftretenden Spaltverluste zurückzuführen. Spaltmassenströme von Aktionsfluid, die zwischen einer Schaufel und einem der Schaufel unter Bildung eines Spalts gegenüberliegenden Bauteil hindurchtreten, resultieren in einem Wirkungsgradverlust (Spaltverlust). Um die Verluste möglichst gering zu halten müssen die Spaltmassenströme durch enge, fertigungstechnisch sehr aufwendig sicherzustellende Spiele begrenzt werden. Dabei darf ein minimales Spiel aus Gründen der Betriebssicherheit der Strömungsmaschine nicht unterschritten werden. Derartige Spaltverluste wurden beispielsweise in der Dissertation von Helmut Pollak "Experimentelle Untersuchungen der Strömungsvorgänge in axialen Kaltluftturbine unter besonderer Berücksichtigung der Radialspaltströme und ihre Einflussparameter", Rheinisch/Westfälische Hochschule, Aachen, 1997, untersucht.

In dem Buch "Kraftwerkstechnik zur Nutzung fossiler, regenerativer und nuklearer Energiequellen" von K. Straus, 4. Auflage, Berlin, Heidelberg, Springer Verlag, 1998, Seite 363-370 , sind magnetohydrodynamische Energiewandler sowie Kraftwerkskonzepte auf der Basis der magnetohydrodynamischen Energieumwandlung beschrieben. Das magnetohydrodynamische Prinzip als solches ist seit langem bekannt und wurde in der vorgenannten Literaturstelle bereits in Konzepte für Kraftwerke, so genannte "MHD-Kraftwerke", eingebracht. Grundlage der magnetohydrodynamischen Energieumwandlung (MHD) ist das Prinzip der elektromagnetischen Induktion das auch bei der konventionellen Dynamomaschine genutzt wird. Nach diesem Prinzip wird in einem elektrisch leitenden Material eine Spannung induziert, wenn sich dieses relativ zu einem Magnetfeld bewegt. Bei einem MHD-Generator strömt ein elektrisch leitendes Fluid durch das Magnetfeld. Infolge der Wirkung des Magnetfeldes kommt es in dem Fluid zu einer Separation ungleichnamiger Ladungen und damit zur direkten Umwandlung von potentieller Energie des Plasmas in elektrischen Strom. Die elektrische Leitfähigkeit ist dabei eine besonders wichtige Eigenschaft des Arbeitsmittels in MHD-Generatoren. Will man die Rauchgase aus der Verbrennung fossiler Brennstoffe als Arbeitsmittel verwenden, müssen diese im Plasmazustand vorliegen, um elektrisch leitend zu sein. Die atomaren Bindungen der Elektronen mit den Kernen sind in diesem Zustand aufgebrochen - das Gas besteht dann vorwiegend aus freien Elektronen und positiv geladenen Ionen. Die teilweise Ionisierung eines Gases erreicht man durch Erhitzen auf sehr hohe Temperaturen von größer als 2000 °C. Aus praktischen Gründen sollte die Leitfähigkeit mindestens 10 S/m betragen. In Verbrennungsgasen erreicht man solche Werte in dieser Größenordnung nur bei Temperaturen von 2000 bis 2500 °C unter Zusatz von leicht ionisierbaren Materialien wie Cäsium oder Kalium. Aufgrund des für ein MHD-Kraftwerk vorgesehenen Funktionsprinzips konnten diese Kraftwerkskonzepte allerdings nicht bis zur Einsatzreife entwickelt werden.

Das Prinzip des MHD-Generators nach diesem Konzept ist es, durch eine Verbrennung mit stark erhitzter Verbrennungsluft in einer druckführenden Brennkammer den Plasmazustand, einen Zustand, in dem positive Ionen und Elektronen im Gas vorliegen, zu erzeugen. Das heiße Plasma tritt beim Austritt aus der Kammer in einen so genannten Diffusor ein. In diesem Diffusor werden die positiven Ionen und die Elektronen durch ein Magnetfeld zu unterschiedlichen Elektroden hin abgelenkt, an denen die Elektronen absorbiert werden bzw. die Ionen durch die Aufnahme von Elektronen ihre Ladung verlieren. Auf diese Weise wird direkt ein Ladungsfluss bewirkt, d.h. ein Strom erzeugt. Nach dem Austritt aus dem MHD-Generator ist das Gas immer noch sehr heiß, etwa 2300 K. Zur weiteren Ausnutzung dieser in dem heißen Gas verfügbaren Wärmeenergie wird mittels Wärmetauschern die zuströmende Verbrennungsluft auf ca. 2100 K vorgewärmt. Die verbleibende Wärmeenergie wird durch konventionelle Abhitzekessel einem nachgeschalteten Dampfprozess zugeführt. Dieses Konzept ist mit erheblichen Problemen behaftet, die seiner praktischen großtechnischen Umsetzung bisher entgegenstehen:

So muss beispielsweise zur Erzielung eines Plasmas bei 2500 K, wie bereits oben beschrieben, das Gas mit leicht ionisierbaren Stoffen (Kalium, Cäsium) geimpft werden. Diese Alkalimetalle sind teuer und nur schwierig handhabbar. Überdies führen sie zur Verschmutzung und korrosiven Angriff der Wärmetauscherflächen, wie sie im Lufterhitzer und im Abhitzekessel vorgesehen sind. Weiterhin stellen die extrem hohen Temperaturen zur Erzielung des Plasmazustands erhebliche Herausforderungen an den MHD-Generator hinsichtlich geeigneter Hochtemperaturwerkstoffe. Davon betroffen sind auch Komponenten des Diffusors und der Wärmetauscher. Weiterhin muss man feststellen, dass der erreichbare Wirkungsgrad der derzeit bekannten und eingesetzten GUD-Kraftwerke inzwischen so hoch ist, dass eine große Wirkungsgradsteigerung mit der Technologie der MHD-Generatoren nur sehr schwierig zu erreichen wird.

Insofern konkurriert die Vorschaltung eines - technisch schwierig zu realisierenden - MHD-Generators vor den Dampfkraftprozess mit der Vorschaltung einer großtechnisch bereits bewährten und akzeptierten Gasturbine. Auf dem Weg zu einer kommerziellen MHD-Anlage sind aber auch außerhalb des eigentlichen MHD-Generators schwierige Probleme zu lösen. Die meisten davon sind durch das hohe Temperaturniveau im Plasmakanal bedingt, für dessen Konstruktion alle bisher bekannten metallischen Werkstoffe ausscheiden. Auch bei den Elektroden haben Erosion, Korrosion und Wärmespannungen die Betriebszeit auf weniger als 1000 Std. begrenzt. Trotz einer intensiven Forschung ist daher die kommerzielle Realisierung einer MHD-Anlage derzeit nicht abzusehen.

In einer zusammenfassenden Würdigung der bisher bekannten Konzepte kann man sagen, dass bei konventionellen Gasturbinen und Dampfturbinen die Schaufeln und Rotor, neben Brennkammer- und Kesselbauteilen, zu den höchst beanspruchten Bauteilen derartiger Strömungsmaschinen zählen. Dabei ist insbesondere die Eintrittsbeschaufelung aufgrund der hohen Temperaturen des heißen Aktionsfluids besonders betroffen. Die Hochtemperatur-Festigkeit der Schaufelwerkstoffe begrenzt dabei mögliche Einsatztemperaturen und erfordert zum Teil technisch aufwendige Kühlungsmaßnahmen. Für die Hersteller von Gasturbinen und Dampfturbinen ist die Erhöhung der oberen Prozesstemperatur jedoch ein wesentlicher Ansatzpunkt zur Wirkungsgradsteigerung. Sowohl im Bereich der Gasturbinen- als auch der Dampfturbinentechnologie sind zum Teil erhebliche Anstrengungen zur Anhebung der oberen Prozesstemperatur zu beobachten. Demgegenüber findet der Einsatz des magnetohydrodynamischen Effekts in den oben beschriebenen MHD-Kraftwerken wegen der unzureichenden Realisierbarkeit, vor allem wegen des nachteiligen Wirkungsprinzips und der technologischen Schwierigkeiten, bis heute keine großtechnische Anwendung.

In thermischen Kraftwerken werden zum Antrieb der Generatoren fast ausschließlich Strömungsmaschinen wie z. B. Gas- und/oder Dampfturbinen eingesetzt. Generatoren haben hierbei die Aufgabe die bereitgestellte mechanische in elektrische Energie umzuwandeln. In thermischen Kraftwerken wird zunächst Druckenergie bzw. Strömungsenergie des Strömungsmediums in der Strömungsmaschine in mechanische Energie umgewandelt. Im Generator wird schließlich die mechanische Energie in elektrische Energie umgewandelt. Dabei ist jede Energieumwandlung mit Verlusten behaftet.

Um den Wirkungsgrad der Strömungsmaschinen weiter zu erhöhen, ist es unter anderem erforderlich, die Prozesstemperatur zu erhöhen. Nachteilig ist hierbei jedoch, dass die thermisch beanspruchten Bauteile für sehr hohe Prozesstemperaturen nicht mehr geeignet sind. Thermisch hochbeanspruchte Bauteile sind z. B. die Rotoren, Schaufeln und die Gehäuse der Turbinen. Insbesondere sind auch Rohrleitungen sowie Heizflächen (Membranwände und Schottenheizflächen und Überhitzeraustrittssammler) des Dampfkessels thermisch belastet.

Aufgabe der Erfindung ist es, eine Strömungsmaschine anzugeben, die die Nachteile der vorbeschriebenen bekannten Konzepte vermeidet. Eine weitere Aufgabe der Erfindung ist es, ein Verfahren zum Betrieb einer Strömungsmaschine anzugeben.

Die erstgenannte Aufgabe wird gelöst durch eine Strömungsmaschine mit einem Strömungskanal und einem Magneten zum Erzeugen eines vorgebbaren Magnetfeldes (B) wenigstens in einem Abschnitt des Strömungskanals, wobei im Strömungskanal ein elektrischer Leiter derart positioniert ist, dass bei einer zeitlichen Änderung des Magnetfeldes am Ort des Leiters in dem Leiter eine elektrische Spannung induzierbar ist.

Mit der Erfindung wird ein völlig neues Konzept für eine Strömungsmaschine beschrieben, bei der die Anwendung des magnetohydrodynamischen Effektes zur Ablenkung eines Strömungsmediums innerhalb von Strömungsmaschinen anstelle von Schaufelgittern erfolgt. Der magnetohydrodynamische Effekt bewirkt eine Ablenkung von elektrisch geladenen Teilchen eines Strömungsmediums im Strömungskanal der Strömungsmaschine. Zur Erzeugung eines definierten magnetischen Feldes ist der Magnet vorgesehen, der geladene Teilchen im Aktionsfluid gemäß der Lorenz-Kraft ablenkt. Bewegt man eine elektrische Ladung mit einer bestimmten Geschwindigkeit in einem vorgegebenen Magnetfeld, beschrieben durch die magnetische Induktion, so erfährt die elektrische Ladung eine Kraft. Die Kraftrichtung steht immer senkrecht zur Geschwindigkeitsrichtung. Geladene Teilchen im durch den Strömungskanal strömenden Aktionsfluid erfahren daher durch das von dem Magneten erzeugte definierte Magnetfeld eine Ablenkung, sofern das Magnetfeld zumindest eine Komponente senkrecht zur Bewegungsrichtung der geladenen Teilchen, das heißt der Strömungsrichtung des Aktionsfluids, aufweist. Geladene Teilchen werden im Idealfall eines unendlich ausgedehnten homogenen Magnetfeldes auf eine Kreisbahn gezwungen. Bei Durcheilen eines endlichen, das heißt eines räumlich begrenzten Magnetfelds, folgen die Teilchen somit einem Kreisbogen. Dieser Effekt wird gemäß der Erfindung ausgenutzt zur Ablenkung des Aktionsfluids selbst im Strömungskanal einer Strömungsmaschine. Durch den Magneten ist ein sowohl zeitlich als auch räumlich definiertes Magnetfeld in dem Strömungskanal erzeugbar, was zu einer definierten Ablenkung geladener Teilchen im Aktionsfluid und durch einen Mitnahmeeffekt in Folge Impulstransfers einer Ablenkung des Aktionsfluids selbst führt.

Die Erfindung geht davon aus, dass beim Eintritt in eine durch ein senkrecht zu einer Haupteinströmungsrichtung wirkendes, axial begrenztes Magnetfeld gebildete Ablenkebene im Strömungsmedium vorhandene elektrisch geladene Teilchen durch das Magnetfeld abgelenkt werden. Die dabei wirkende Ablenkungskraft wird auch als Lorenz-Kraft bezeichnet und hängt von der magnetischen Flussdichte, von der Geschwindigkeit der einzelnen Teilchen und von ihrer Ladung ab. Die Ablenkungskraft wirkt hierbei senkrecht zur Bewegungsrichtung. Wegen der unterschiedlichen Vorzeichen der Ladung werden die negativen Teilchen in eine andere Richtung als die positiv geladenen Teilchen abgelenkt.

Aufgrund der unterschiedlichen Ablenkungen positiver und negativer Teilchen, die auf ein unterschiedliches Masse zu Ladungsverhältnis zurückzuführen sind, wird ein Drehimpuls auf das Aktionsfluid ausgeübt und es wird sich ein Reaktionsmoment auf das Magnetfeld einstellen. Eine Rotation des Magnetfeldes und die Achse der Ablenkebene ist die Folge, da das Magnetfeld bei glatten, ringförmigen Polen nicht in der Lage ist, ein Moment zu übertragen. Das Magnetfeld wird demnach mit einer Leerlauf-Rotationsgeschwindigkeit rotieren. Mit an- deren Worten im Strömungskanal wirkt ein zeitlich veränder- bares Magnetfeld. Die Erfindung geht weiter davon aus, dass an einer Berandung des Strömungskanals axial verlaufende elektrische Leitungen so angeordnet werden, dass die Feldlinien des rotierenden Magnetfeldes diesen elektrischen Leiter durcheilen. Die elektrischen Leiter sollen derart angeordnet werden, dass am Ort des elektrischen Leiters in Folge des zeitlich veränderbaren Magnetfeldes eine elektrische Spannung induziert wird. Somit wird direkt die Strömungsenergie des Mediums in elektrische Energie umgewandelt.

Die Erfindung geht weiterhin davon aus, dass durch die Einbringung des elektrischen Leiters in Form einer Anzahl von Windungen die Rotationsgeschwindigkeit des Magnetfeldes verringert wird, während in gleichem Maße die Drehimpulsübertragung auf das Aktionsfluid zunimmt. Dieses Wirkprinzip kann auch auf Flüssigkeiten und Gase angewendet werden. Das vorgestellte Wirkprinzip kann auch derart eingesetzt werden, dass elektrische Energie in Strömungsenergie umgesetzt wird. Das bedeutet, der hier vorgestellt Wandler kann als Turbine, Pumpe oder Verdichter wirken.

Mit anderen Worten, die Erfindung verknüpft das magneto-hydrodynamische Prinzip, bei dem elektrisch geladene Teilchen in einem Aktionsfluid abgelenkt werden, mit dem Prinzip der elektromagnetischen Induktion, bei dem eine elektrische Spannung in einem in einem Magnetfeld befindlichen elektrischen Leiter erzeugt wird.

Die Erfindung geht davon aus, dass das Aktionsfluid durch das Magnetfeld abgelenkt wird. Durch eine in unterschiedliche Richtungen abwechselnd erfolgende Ablenkung kann das Aktionsfluid nach und nach expandiert werden. Dabei wird Energie in elektrische Energie am elektrischen Leiter umgewandelt.

Es ist vorteilhaft, ein Plasma oder geladene Ionen als Aktionsfluid einzusetzen, da hier eine vollständige Trennung in unterschiedlich geladene Teilchen erfolgt. Der Wirkungsgrad der Strömungsmaschine erhöht sich dadurch.

In einer vorteilhaften Weitergestaltung weist der elektrische Leiter mehrere Wicklungen auf. Dadurch erhöht sich gemäß dem Induktionsgesetz die im elektrischen Leiter induzierte Spannung.

In einer weiteren vorteilhaften Ausgestaltung wird der elektrische Leiter fest angeordnet. Der elektrische Leiter wird somit fest fixiert und erfährt keine Beschleunigung trotz einer äußeren Kraft.

In einer weiteren vorteilhaften Ausgestaltung wird der elektrische Leiter senkrecht zu den Feldlinien des Magnetfeldes (B) angeordnet, was die induzierte elektrische Spannung erhöht, die maximal ist bei einer senkrechten Anordnung der Feldlinien des Magnetfeldes (B) und des elektrischen Leiters zueinander.

In einer weiteren vorteilhaften Ausgestaltung wird der elektrische Leiter außerhalb des Strömungskanals angeordnet. Der elektrische Leiter wird dann dem Strömungskanal benachbart angeordnet. Besonders vorteilhaft ist es, wenn der Abschnitt des Strömungskanals von einer Oberfläche eines der Magnetpole und einer Strömungsführungswand festgelegt ist, die in einem Abstand zu der Oberfläche des anderen Magnetpols liegt.

Dadurch wird die Möglichkeit geschaffen, den elektrischen Leiter räumlich von dem Aktionsfluid zu trennen. Ein Vorteil entsteht hierbei dadurch, dass Aktionsfluidpartikel durch die Strömungsführungswand davon abgehalten werden, gegen den elektrischen Leiter zu stoßen. Einer Zerstörung des elektrischen Leiters wird hierdurch vorgebeugt.

In einer weiteren vorteilhaften Ausgestaltung wird die Strömungsmaschine derart ausgebildet, dass der Strömungskanal langgestreckt und im Querschnitt ringförmig ausgebildet ist.

Dadurch wird es möglich, den Wirkungsgrad der Strömungsmaschine zu erhöhen, da das Magnetfeld eine Rotationsbewegung durchführt und ein zeitlich sich änderndes Magnetfeld permanent in einem ringförmigen Strömungskanal in einem elektrischen Leiter eine elektrische Spannung induziert.

In einer vorteilhaften Ausgestaltung ist wenigstens einer der Pole des Magneten über eine Feldwicklung erzeugbar. Dadurch ist es möglich, ein Magnetfeld herzustellen, das mittels einer Feldwicklung stabil und einstellbar ist. Darüber hinaus kann diese Ausführungsform bei hohen Temperaturen eingesetzt werden. Permanentmagnete zeigen bekannterweise bis zu einer Curie-Temperatur magnetische Eigenschaften.

In einer besonders bevorzugten Ausgestaltung der Strömungsmaschine weist das Magnetfeld entlang einer Anfangseinströmungsrichtung mindestens einen Vorzeichenwechsel auf.

Mit dem Vorzeichenwechsel des Magnetfeldes ist es möglich, geladene Teilchen im Strömungskanal in zueinander entgegen gesetzte Richtungen senkrecht zur Bewegungsrichtung der geladenen Teilchen, d.h. des Aktionsfluides, abzulenken. Im Falle einer axialen Strömungsmaschine ist es günstig, zumindest einen Vorzeichenwechsel des Magnetfeldes vorzusehen, so dass entlang der Anfangseinströmungsrichtung zumindest zwei unterschiedliche räumliche Abschnitte mit einem Magnetfeld unterschiedlichen Vorzeichens vorliegen. Bei Bewegung eines geladenen Teilchens entlang der Anfangseinströmungsrichtung der Strömungsmaschine erfolgt somit eine Tangentialablenkung in dem ersten Abschnitt, beispielsweise im Uhrzeigersinn, während in dem zweiten Abschnitt das geladene Teilchen eine Kraft in entgegen gesetzter Richtung erfährt, beispielsweise entgegen dem Uhrzeigersinn.

In einer vorteilhaften Ausgestaltung ist der Strömungskanal entlang der Anfangseinströmungsrichtung aufgeweitet.

Die ablenkende Kraft ist proportional zu der Geschwindigkeit der Teilchen im Aktionsfluid. Eine besonders hohe Geschwindigkeit des Aktionsfluids führt demnach auch zu einer hohen Ablenkkraft. Durch einen sich aufweitenden Strömungskanal ist es möglich, einem Aktionsfluid durch Volumenvergrößerung und Druckerniedrigung die Druckenergie in kinetische Energie umzuwandeln. Die Teilchen des Aktionsfluides beschleunigen demnach in einem sich aufweitenden Strömungskanal, was zu einer Vergrößerung der Ablenkkraft führt.

Vorzugsweise weist die Strömungsmaschine eine Ionisierungseinrichtung zur Erzeugung von elektrisch geladenen Teilchen im Aktionsfluid auf, die vor dem Abschnitt des Strömungskanals angeordnet ist. Die Ionisation von Neutralteilchen im Aktionsfluid kann hierbei auf unterschiedliche Weise mittels der Ionisierungseinrichtung erfolgen, beispielsweise durch Stossionisation oder durch Strahlungsionisation. Je nach Wirkungsquerschnitt für die Ionisation bestimmter Neutralteilchen ist ein geeigneter Ionisationsprozess zu wählen, auf dessen Prinzip die Ionisierungseinrichtung arbeiten soll. Hohe Temperaturen wie bei einer thermischen Plasmaerzeugung sind dabei vorteilhafterweise nicht erforderlich. Auch ist Mehrfachionisation möglich. Mittels der Ionisierungseinrichtung ist damit ein ionenhaltiges Aktionsfluid erzeugbar bzw. bereitstellbar, welches die magnetohydrodynamische Strömungsmaschine der Erfindung beim Durchströmen des Strömungskanals antreibt.

Vorzugsweise weist die Strömungsmaschine eine Rekombinationseinrichtung zur Rekombination von geladenen Teilchen im Aktionsfluid, die hinter dem Abschnitt des Strömungskanals angeordnet ist, auf.

In einer weiteren vorteilhaften Ausgestaltung wird der Magnet von einer mittels einer Feldwicklung magnetisierbaren Begrenzungswand und einer gegenüberliegenden ferromagnetischen zweiten Begrenzungswand gebildet. Mit dem Einsatz einer ferromagnetischen zweiten Begrenzungswand besteht nun die Möglichkeit, mit nur einer Feldwicklung ein Magnetfeld zu erzeugen. Die ferromagnetische zweite Begrenzungswand kann durch eine individuelle Form gekennzeichnet sein.

In einer weiteren vorteilhaften Ausgestaltung ist der Strömungskanal als Strömungsrohr zur Führung des Aktionsfluids vorgesehen. Vorteilhafterweise sollte das Strömungsrohr aus einem nicht ferromagnetischen Material bestehen. Das Aktionsfluid wird hierbei komplett in einem Strömungsrohr geführt, welche der idealen Bahnkurve des Aktionsfluids folgt und durch Krümmungen und Querschnittsübergänge den Expansionsverlauf hinsichtlich Druck- und Geschwindigkeitsverlauf geeignet nachbildet. Dadurch wird gänzlich vermieden, dass das Aktionsfluid mit den Magnetpolen oder mit den Wicklungen des elektrischen Leiters in Berührung kommt. Im Falle von sehr hohen Temperaturen des Aktionsfluides kann dadurch gezielt ein geeignetes Material für das Strömungsrohr eingesetzt werden.

Die auf das Verfahren hin gerichtete Aufgabe wird durch ein Verfahren zum Betrieb einer Strömungsmaschine mit einem Strömungskanal, durch den Aktionsfluid strömt und durch einen im Strömungskanal anliegendes Magnetfeld abgelenkt wird und ein elektrischer Leiter derart angeordnet wird, dass bei einer zeitlichen Änderung des Magnetfeldes (B) am Ort des elektrischen Leiters eine elektrische Spannung induziert wird, gelöst.

Die Vorteile des Verfahrens ergeben sich in analoger Weise aus den Vorteilen der oben beschriebenen Strömungsmaschine.

Vorzugsweise wird im Strömungskanal ein radiales Magnetfeld erzeugt, welches entlang der Strömungsrichtung des ionenhaltigen Aktionsfluids alterniert. Dabei bedeutet alternierendes Magnetfeld, dass entlang der Strömungsrichtung die radiale Komponente des Magnetfeldes mindestens einen Vorzeichenwechsel aufweist, d.h. eine Umpolung der Radialkomponente stattfindet.

Das Magnetfeld wird dabei in bevorzugter Ausgestaltung des Verfahrens zeitlich und/oder räumlich geregelt. Dies kann z.B. durch entsprechende Anordnung und elektrische Ansteuerung des Magneten oder der Magnete zur Erzeugung einer vorgebbaren Feldverteilung im Strömungskanal erfolgen.

Bevorzugt wird das ionenhaltige Aktionsfluid durch Ionisation von Teilchen im Aktionsfluid vor Durchströmen des Strömungskanals gebildet. Dies kann z.B. durch eine der Eintrittsöffnungen des Strömungskanals vorgeschaltete Ioinisierungseinrichtung erreicht werden.

Weiter bevorzugt werden Ionen durch Ionisation von Teilchen im Aktionsfluid während dem Durchströmen des Strömungskanals gebildet. Die Insitu-Erzeugung hat dabei den Vorteil, dass die Ionen gezielt in den Bereichen erzeugt werden können, wo sie für die Vermittlung einer magnetischen Ablenkung auch benötigt werden.

Zur Erzeugung der Ionen werden diese vorzugsweise durch Stossionisation gebildet. Alternativ oder zusätzlich werden Ionen durch Strahlungsionisation gebildet, wobei Aktionsfluid mit einer für Teilchen im Aktionsfluid ionisierend wirkenden Strahlung bestrahlt wird. Diese Strahlung kann beispielsweise UV-Strahlung oder Röntgenstrahlung sein.

Vorzugsweise wird in einem Rekombinationsprozess und/oder einem katalytischen Prozess das Aktionsfluid von schädigenden Substanzen gereinigt. Die Reinigung wird bevorzugt während und/oder nach Durchströmen des Strömungskanals durchgeführt.

Im Folgenden wird die Erfindung anhand einer Zeichnung näher erläutert. Darin zeigen in vereinfachter und nicht maßstäblicher Darstellung:
- Figur 1: einen Querschnitt eines Abschnittes einer auf einem magnetohydrodynamischen Prinzip basierenden Strömungsmaschine,
- Figur 2: ein in Längsrichtung dargestellter Querschnitt der Strömungsmaschine aus Figur 1,
- Figur 3: die Strömungsmaschine aus Figur 1 mit Darstellung einer Feldwicklung,
- Figur 4: einen Schnitt durch einen ringförmig ausgebildeten Strömungskanal einer Strömungsmaschine,
- Figur 5: eine Darstellung einer Magnetfeldanordnung der Strömungsmaschine,
- Figur 6: eine Seitenansicht einer alternativen Magnetfeldanordnung,
- Figur 7: eine Seitenansicht einer weiteren alternativen Magnetfeldanordnung,
- Figur 8: eine Seitenansicht einer ringförmig ausgebildeten Strömungsmaschine,
- Figur 9: eine perspektivische Darstellung einer mit einem Strömungsrohr ausgebildeten Strömungsmaschine,
- Figur 10: eine perspektivische Darstellung einer rohrförmigen Strömungsmaschine,
- Figur 11: einen Schnitt durch eine mit Strömungsrohr und einem ferromagnetischen Gegenpol ausgebildeten Strömungsmaschine,
- Figur 12: einen Schnitt durch ein alternatives Strömungsrohr,
- Figur 13: eine Draufsicht auf einen Strömungskanal,
- Figur 14: eine Schnittdarstellung entlang der Linie AA der Figur 13.

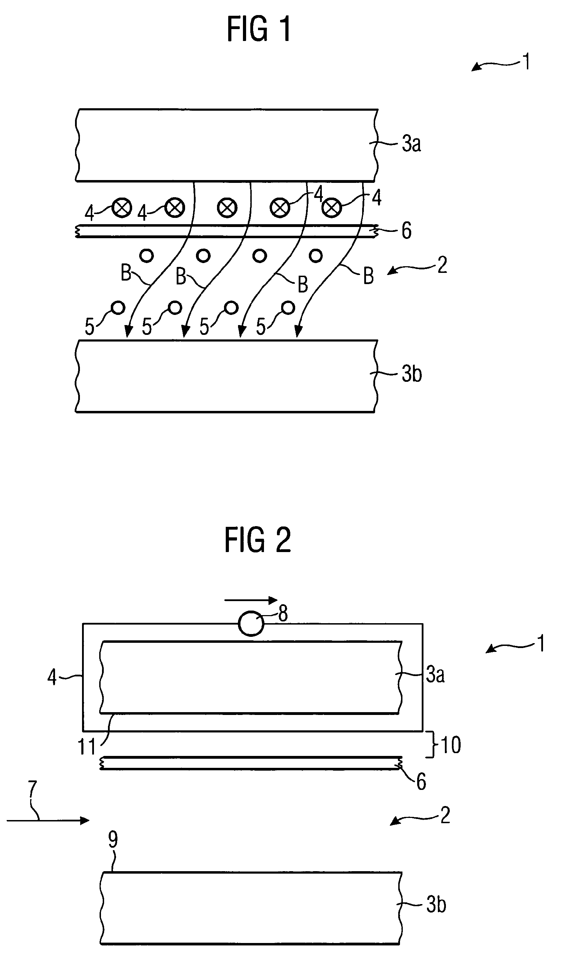

Figur 1 zeigt einen Querschnitt einer Strömungsmaschine 1, welche nach einem magneto-hydrodynamischen Prinzip arbeitet. Die Strömungsmaschine 1 weist hierzu einen Strömungskanal 2 und einen Magneten 3 auf. Der Magnet 3 ist zum Erzeugen eines vorgebbaren Magnetfeldes B wenigstens in einem Abschnitt des Strömungskanals 2 ausgebildet. In dem in Figur 1 dargestellten Ausführungsbeispiel weist der Magnet 3 einen magnetischen Nordpol 3a und einen magnetischen Südpol 3b auf. In dem Abschnitt des Strömungskanals 2 ist ein elektrischer Leiter 4 derart positioniert, dass bei einer zeitlichen Änderung des Magnetfeldes B am Ort des elektrischen Leiters 4 in dem elektrischen Leiter 4 eine elektrische Spannung induzierbar ist.

Im Betrieb strömt ein Aktionsfluid, das einzelne geladene Ionen 5 aufweist, durch den Strömungskanal 2. Das Aktionsfluid kann auch als ein Plasma ausgebildet sein. In der in Figur 1 aufgeführten Darstellung der Strömungsmaschine 1 strömt das Aktionsfluid aus der Zeichenebene heraus in Richtung des Beobachters. Je nach Vorzeichen des geladenen Ions 5 wirkt eine Lorenz-Kraft nach links oder nach rechts. Diese Lorenz-Kraft führt zu einer Ablenkung der geladenen Ionen 5. Eine kreisförmige Bewegung der geladenen Ionen 5 ist dadurch die Folge. Die Bewegung der geladenen Ionen 5 bewirkt ein sich änderndes zeitliches Magnetfeld B. Dieses zeitlich sich ändernde Magnetfeld B führt zu einem sich verändernden magnetischen Fluss am Ort des elektrischen Leiters 4. In dem elektrischen Leiter 4 wird dadurch eine elektrische Spannung induziert. Unter zeitlicher Änderung des Magnetfeldes ist auch ein den elektrischen Leiter durcheilendes Magnetfeld zu verstehen, dessen Betrag konstant ist.

Der elektrische Leiter 4 kann fest angeordnet werden. Darüber hinaus kann der elektrische Leiter 4 senkrecht zu den Feldlinien des Magnetfeldes (B) angeordnet werden.

In der dargestellten Ausführungsform wird zur Abgrenzung des Aktionsfluides zu dem elektrischen Leiter eine Strömungsführungswand 6 angeordnet. Die Strömungsführungswand 6 sollte idealerweise nicht aus magnetischen Materialien bestehen.

Der Strömungskanal 2, der in einer alternativen Ausführungsform aus den Oberflächen des magnetischen Nordpols 3a und des magnetischen Südpols 3b gebildet wird, ist zur Führung eines Aktionsfluids ausgebildet. Bevorzugt wird der Strömungskanal 2 derart ausgebildet, dass er zur Führung eines Plasmas als Aktionsfluid geeignet ist. Das bedeutet insbesondere, dass der Strömungskanal 2 Materialien aufweist, die hohen Temperaturen, wie sie in einem Plasma herrschen, standhält.

Um die magnetische Flussdichte zu erhöhen, besteht der Magnet 3 zumindest teilweise aus einem ferromagnetischen Material. Hierdurch ist ein guter Magnetfeld-Ringschluss erreicht und es werden besonders hohe Flussdichten im Strömungskanal 2 gerade dort erzielt, wo die Wechselwirkung des Magnetfelds B mit den geladenen Ionen 5 vorgesehen ist. Das Magnetfeld B ist im Strömungskanal 2 im Wesentlichen radial gerichtet, d.h. senkrecht zu einer Anfangseinströmungsrichtung 7.

In der in Figur 1 dargestellten Ausführungsform weist der elektrische Leiter 4 mehrere Wicklungen auf. Idealerweise sind diese Wicklungen parallel zueinander ausgerichtet. Je mehr Wicklungen angeordnet werden können, umso größer ist die erreichbare induzierte Spannung. In weiteren Ausführungsformen kann der elektrische Leiter 4 fest angeordnet werden. Zweckmäßigerweise wird der elektrische Leiter 4 parallel zu einer Anfangseinströmungsrichtung 7 angeordnet. Der elektrische Leiter 4 liegt dadurch idealerweise senkrecht zu den Feldlinien des Magnetfeldes B an.

Nicht näher dargestellt ist eine Ionisierungseinrichtung zur Erzeugung von geladenen Teilchen im Aktionsfluid, die vor dem Strömungskanal 2 angeordnet werden kann. Ebenfalls nicht näher dargestellt ist eine Rekombinationseinrichtung zur Rekombination von geladenen Teilchen im Aktionsfluid, die hinter dem Abschnitt des Strömungskanals 2 angeordnet werden kann. Die Ionen können hierbei durch Stossionisation oder durch Strahlungsionisation gebildet werden.

In einer Ausführungsform kann in einem Rekombinationsprozess und/oder in einem katalytischen Prozess das Aktionsfluid von schädigenden Substanzen gereinigt werden.

Im Betrieb wird das auf die geladenen Teilchen einwirkende Magnetfeld B derart erzeugt, dass beim Durchströmen des Strömungskanals die tangentiale Geschwindigkeitskomponente des ionenhaltigen Aktionsfluids (A) gezielt beeinflusst wird.

Die Strömungsmaschine 1 kann mit einem Aktionsfluid bestehend aus kompressiblen Medien als auch aus inkompressiblen Medien betrieben werden.

In Figur 2 ist ein Querschnitt in Längsrichtung einer auf einem magnetohydrodynamischen Prinzip basierenden Strömungsmaschine 1 zu sehen. In der Figur 2 ist lediglich eine Wicklung des elektrischen Leiters 4 dargestellt. Der Übersichtlichkeit wegen sind keine geladenen Ionen 5 dargestellt. Im Betrieb strömen geladene Ionen 5 von links nach rechts entlang einer Anfangseinströmungsrichtung 7 und werden im Strömungskanal 2 wie weiter oben beschrieben abgelenkt. In dem elektrischen Leiter 4 wird durch Ablenkeffekte infolge der Lorenz-Kraft eine elektrische Spannung induziert. Diese elektrische Spannung kann mit einem Spannungsmessgerät 8 erfasst werden. Zweckmäßigerweise wird der Strömungskanal 2 so gebildet, dass der elektrische Leiter 4 außerhalb des Strömungskanals 2 angeordnet wird. In der in Figur 2 dargestellten Ausführungsform wird der Strömungskanal 2 durch eine Oberfläche 9 des magnetischen Südpols 3b und eine Strömungsführungswand 6 gebildet. Eine Berührung der geladenen Ionen 5 mit dem elektrischen Leiter 4 ist dadurch nahezu ausgeschlossen. Damit die induzierte elektrische Spannung möglichst groß wird, wird zweckmäßigerweise der elektrische Leiter 4 dem Strömungskanal 2 benachbart angeordnet.

Zur Stabilisierung des Magnetfeldes B kann dieses zeitlich und/oder räumlich geregelt werden.

Wie in Figur 2 dargestellt, wird der Abschnitt des Strömungskanals 2 von der Oberfläche 9 des magnetischen Südpols und der Strömungsführungswand 6 festgelegt, wobei die Strömungsführungswand 6 in einem Abstand 10 zu einer Oberfläche 11 des anderen Magnetpols, in diesem Fall des magnetischen Nordpols 3a, liegt.

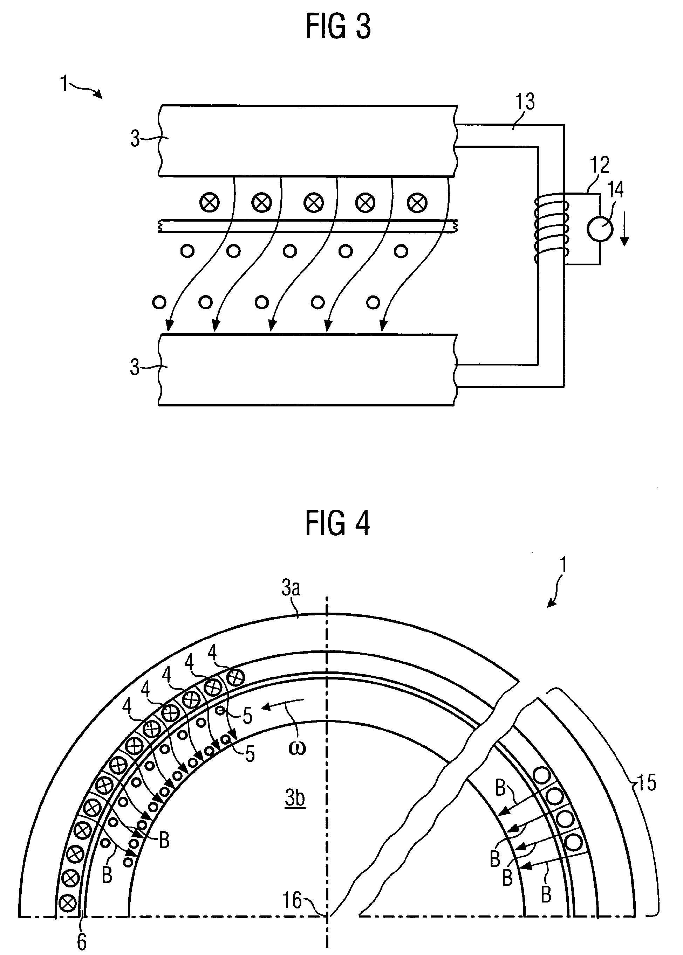

In Figur 3 ist die Strömungsmaschine 1 mit einer Feldwicklung 12 zum Erzeugen eines Magnetfeldes dargestellt. Die Feldwicklung 12 ist idealerweise über ein ferromagnetisches Material 14 mit dem Magneten 3 verbunden. Mittels einer Stromquelle 14 wird in der Feldwicklung 12 ein Magnetfeld erzeugt, das über das ferromagnetische Material 13 zu dem Magneten 3 weitergeführt wird. Die in Figur 3 dargestellte Anordnung des Strömungskanals ist mit der Darstellung in Figur 1 identisch.

In der Figur 4 ist eine alternative Ausführungsform der Strömungsmaschine 1 zu sehen. Der Strömungskanal 2 wird hierbei langgestreckt und im Querschnitt ringförmig ausgebildet. In der in Figur 4 dargestellten Ausführungsform ist der Strömungskanal 2 um eine Drehachse 16 rotationssymmetrisch ausgebildet. Im Betrieb strömt ein Aktionsfluid, bestehend aus geladenen Ionen 5, aus der Zeichenebene heraus und wird durch das Magnetfeld B abgelenkt, was zu einer zeitlichen Veränderung des Magnetfeldes B führt. Das Magnetfeld B wird zu einer Bewegung in Kreisrichtung gezwungen. Das rotierende Magnetfeld B bewegt sich mit einer Rotationsgeschwindigkeit Q in einer Drehrichtung. Das rotierende Magnetfeld B induziert im elektrischen Leiter 4 eine elektrische Spannung.

In der Figur 4 ist zur Verdeutlichung ein unbeeinflusster Bereich 15 der Strömungsmaschine 1 zu sehen, durch den kein Aktionsfluid strömt. Man sieht leicht, dass das Magnetfeld B radial verläuft, wenn keine geladenen Ionen 5 durch den Strömungskanal 2 strömen.

Durch die Einbringung des elektrischen Leiters 4 in Form einer Anzahl von Windungen wird sich die Rotationsgeschwindigkeit des Magnetfeldes verringern, während in gleichem Maße die Drehimpulsübertragung auf das Aktionsfluid zunimmt.

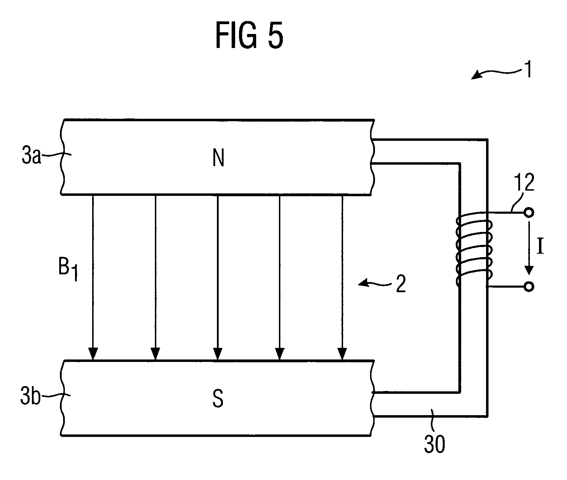

In der Figur 5 ist eine vereinfachte Darstellung der Strömungsmaschine 1 zu sehen, mit der Darstellung einer Möglichkeit zur Aufbringung eines Magnetfeldes. Mittels einer Feldwicklung 12 wird, wie weiter oben beschrieben, ein Magnetfeld über möglichst ferromagnetische Materialien 30 aufgebracht. Das Magnetfeld B wirkt als Ablenkebene für das Aktionsfluid. Da das Magnetfeld B über die Feldwicklung 12 angesteuert werden kann, ist eine ebenenweise Optimierung der Ablenkung möglich.

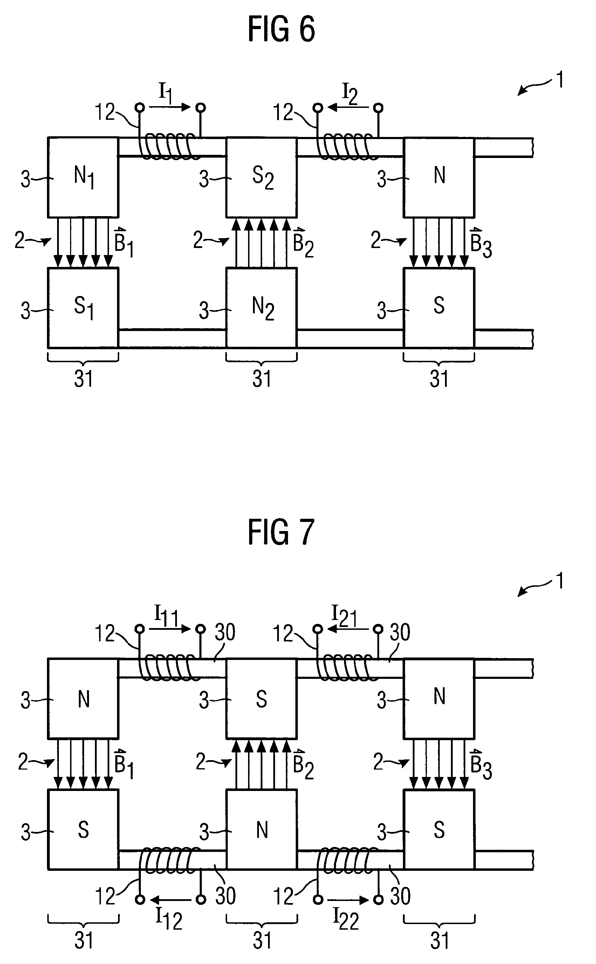

In der Figur 6 ist eine alternative Ausführungsform einer Strömungsmaschine 1 mit mehreren Ablenkfeldern 31 zu sehen. Die Magnetfelder B1, B2 und B3 werden hierbei über einzelne Feldwicklungen 12 und einem aus ferromagnetischen Materialien ausgebildeten Gegenpol erzeugt. Diese Ausführungsform bietet sich besonders an, wenn einzelne Magnetpole nicht zugänglich sind. Die Ablenkebenen müssen einen geeigneten Abstand zueinander haben, damit die Magnetfelder B sich nicht gegenseitig stören.

Eine weitere Ausführungsform der Strömungsmaschine 1 ist in Figur 7 zu sehen. Hierbei sind die Feldwicklungen 12 auf beiden Seiten des Magneten 3 angeordnet. Die Feldwicklungen 12 können von dem Magneten 3 räumlich getrennt durch ausreichende ferromagnetische Materialien 30 angeordnet werden. Die räumliche Trennung gestattet es, die Feldwicklungen 12 in einem hinreichenden Abstand vom Strömungskanal 2 anzuordnen. Damit können die Wicklungen auf einer ausreichend niedrigen Temperatur gehalten werden. Dies eröffnet z.B. die Möglichkeit zum Einsatz von supraleitenden Magneten. Die Magnetfelder können prinzipiell auch durch Permanentmagnete erzeugt werden.

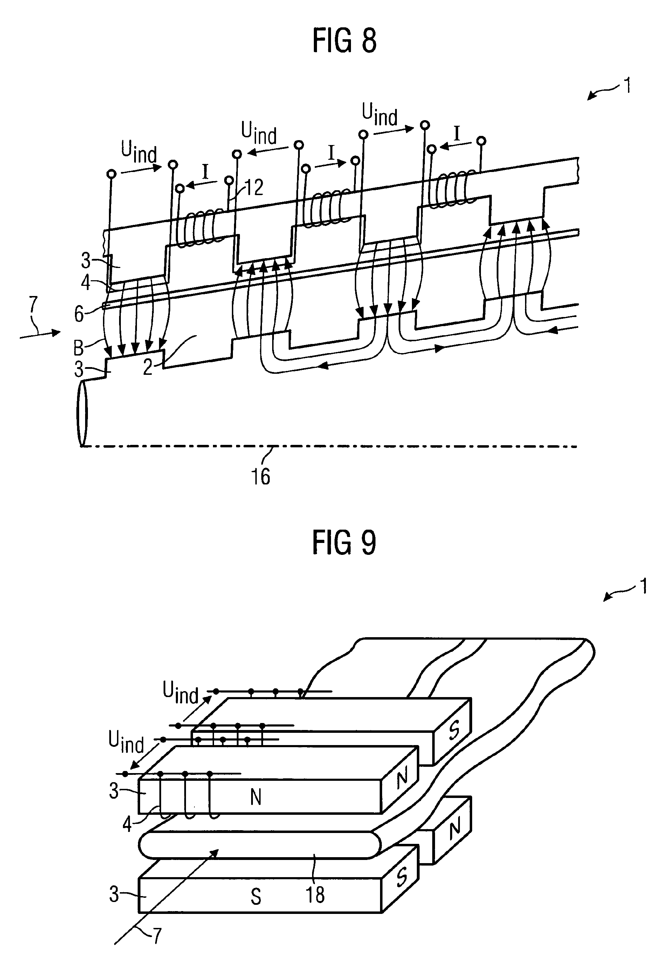

In Figur 8 ist eine Seitenansicht einer weiteren Ausführungsform einer Strömungsmaschine 1 dargestellt. Der Strömungskanal 2 ist hierbei durch die Drehachse 16 ringförmig und langgestreckt angeordnet. Das Magnetfeld B weist entlang der Anfangseinströmungsrichtung 7 mindestens einen Vorzeichenwechsel auf. Das Magnetfeld B wird dem im Ausführungsbeispiel gemäß Figur 5 dargestellten Feldwicklungen 12 erzeugt. Wenigstens einer der Magnetpole 3 ist über die Feldwicklung 12 erzeugbar. Der Strömungskanal 2 ist entlang der Anfangseinströmungsrichtung 7 aufgeweitet, was dazu führt, dass das Aktionsfluid durch den Strömungskanal 2 beschleunigt wird.

Ein magnetischer Pol kann durch eine Feldwicklung 12 erzeugbar sein. Der gegenüberliegende magnetische Pol kann ebenfalls durch die Feldwicklung 12 erzeugt werden. Der magnetische Gegenpol kann allerdings auch durch ein ferromagnetisches Material 30 erzeugt werden.

In der Figur 9 ist eine alternative Ausführungsform einer Strömungsmaschine 1 zu sehen. Das Aktionsfluid strömt hierbei in einem Strömungskanal, der als Strömungsrohr 18 zur Führung des Aktionsfluids ausgebildet ist. Das Material des Strömungsrohrs 18 muss entsprechend für die hohen Temperaturen eines Aktionsfluides ausgesucht werden. Da die Strömungsbahn des Aktionsfluides nicht geradlinig verläuft, wird das Strömungsrohr 18 entsprechend der erwarteten Strömungsbahn des Aktionsfluids gefertigt.

Das Strömungsrohr 18 wird aus einer Anzahl nicht ferromagnetischer Materialien gebildet, welches der idealen Bahnkurve des Aktionsfluids im Magnetfeld folgt und sie durch Krümmungen und Querschnittsübergänge hinsichtlich Druck- und Geschwindigkeitsverlauf geeignet nachbildet. Mit dieser Ausführungsform ist es möglich, die Strömungsmaschine 1 einfacher zu realisieren, da keine großen dickwandigen Bauteile den Strömungsraum begrenzen, sondern dieser durch die Wand des Srömungsrohres 18 begrenzt sind.

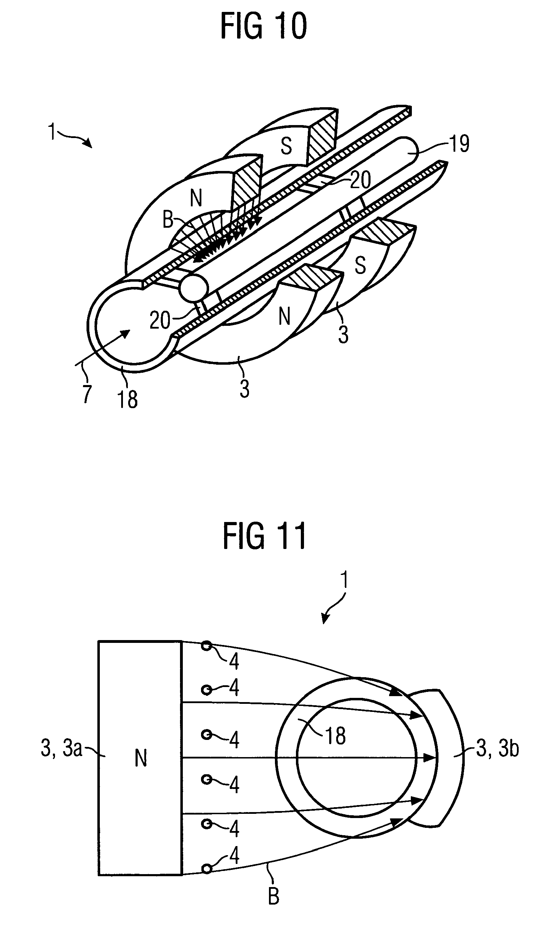

In Figur 10 ist eine weitere Ausführungsform der Strömungsmaschine 1 zu sehen. Deutlich hervorgehoben ist hierbei die rohrförmige Anordnung des Magneten 3. Das Magnetfeld B weist in der Anfangseinströmungsrichtung 7 mindestens einen Vorzeichenwechsel auf. Ein Gegenpol des Magneten 3 ist als ferromagnetisches Material 19 ausgebildet. Das Aktionsfluid strömt durch das Strömungsrohr 18 und wird im Strömungsrohr 18 gemäß der Lorenz-Kraft abgelenkt. Das sich dadurch ändernde Magnetfeld B wird in einem nicht näher dargestellten elektrischen Leiter 4 eine elektrische Spannung induzieren. Das ferromagnetische Material 19 wird durch Stützelemente 20 an dem Strömungsrohr 18 befestigt.

Diese Ausführungsform ist besonders kompakt und kann daher in Dampfkraftanlagen eingesetzt werden. Die rohrförmige Anordnung kann in der Nähe eines Dampferzeugers oder Kessels angeordnet werden, wodurch die hohen im Dampferzeuger oder Kessel herrschenden Temperaturen ausgenutzt werden.

In der Figur 11 ist eine weitere Ausführungsform der Strömungsmaschine 1 dargestellt. Die Strömungsmaschine weist einen Magneten 3 auf. In der Figur 11 ist links ein magnetischer Nordpol 3a dargestellt. Der magnetische Südpol 3b wird aus einem ferromagnetischen Material gebildet. Das Aktionsfluid strömt durch das Strömungsrohr 18 und beeinflusst das Magnetfeld B. Durch die Ablenkung des Aktionsfluides ändert sich am Ort des elektrischen Leiters 4 das Magnetfeld, was zu einer induzierten elektrischen Spannung führt.

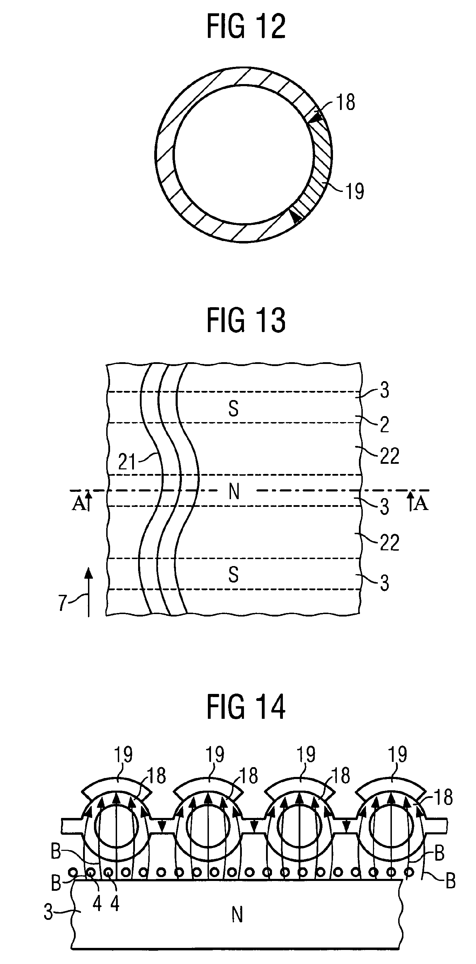

In der Figur 12 ist eine alternative Darstellung des Strömungsrohres 18 zu sehen. Statt ein ferromagnetisches Material 19 an einer Außenwand des Strömungsrohrs 18 anzuordnen (wie in Figur 11 dargestellt), kann das ferromagnetische Material 19 selbst als Wand des Strömungsrohrs 18 ausgebildet werden. Wie in Figur 12 dargestellt, sollte das ferromagnetische Material an das Strömungsrohr 18 in irgendeiner Form befestigt werden.

Diese Ausführungsform kann idealerweise in einem Dampferzeuger eingesetzt werden. Diese Ausführungsform kann unmittelbar in Heizflächen integriert werden, so dass eine Expansion unter kontinuierlicher Wärmezufuhr einfach realisierbar ist.

In der Figur 13 ist eine Draufsicht auf den Strömungskanal 2 einer Strömungsmaschine 1 dargestellt. Der Strömungskanal 2 weist hierbei mehrere nicht näher dargestellt Strömungsrohre 18 auf. In der Anfangseinströmungsrichtung 7 strömt das Aktionsfluid und wird durch den Einfluss der Magnete 3, die in der Anfangseinströmungsrichtung 7 einen Vorzeichenwechsel aufweisen, zu einer Strömungsbahn 21 gezwungen. In den Bereichen der Magnete 3 erfährt das Aktionsfluid eine Kraft und wird auf näherungsweise Kreisbahn gezwungen. In den magnetfeldfreien Bereichen 22 strömt das Aktionsfluid beschleunigungsfrei. Das Aktionsfluid führt somit im Grunde genommen eine Zickzackbewegung aus. Zweckmäßigerweise werden die Strömungsrohre 18 ebenfalls zickzackförmig ausgebildet.

In der Figur 14 ist ein Schnitt entlang der Linie AA dargestellt. Der Übersichtlichkeit wegen sind lediglich vier Strömungsrohre 18 dargestellt. Durch die Strömungsrohre 18 strömt jeweils ein Teil des Aktionsfluides. Im unteren Bereich der Figur 14 ist ein magnetischer Nordpol 3 dargestellt. Gegenüber dem magnetischen Nordpol ist das ferromagnetische Material 19 jeweils an einer Seite des Strömungsrohres 18 angeordnet. Der elektrische Leiter 4 ist idealerweise senkrecht zu den Magnetfeldlinien B angeordnet.

In dem magnetfeldfreien Bereich 22 ist keine magnetische Ablenkung der geladenen Ionen 5 zu verzeichnen.

## Patentansprüche

1. Strömungsmaschine (1)
mit einem Strömungskanal (2) und einem Magneten (3) zum Erzeugen eines vorgebbaren Magnetfeldes (B) wenigstens in einem Abschnitt des Strömungskanals (2),
**dadurch gekennzeichnet, dass**
in dem Abschnitt des Strömungskanals (2) ein elektrischer Leiter (4) derart positioniert ist, dass bei einer zeitlichen Änderung des Magnetfeldes (B) am Ort des Leiters (4) in dem Leiter eine elektrische Spannung induzierbar ist.

2. Strömungsmaschine (1) nach Anspruch 1,
**dadurch gekennzeichnet, dass**
der Strömungskanal (2) zur Führung eines Aktionsfluids ausgebildet ist.

3. Strömungsmaschine (1) nach Anspruch 2,
**dadurch gekennzeichnet, dass**
der Strömungskanal (2) zur Führung eines Plasmas oder geladener Ionen als das Aktionsfluid ausgebildet ist.

4. Strömungsmaschine (1) nach einem der vorhergehenden Ansprüche,
**dadurch gekennzeichnet, dass**
der elektrische Leiter (4) mehrere Wicklungen aufweist.

5. Strömungsmaschine (1) nach einem der vorhergehenden Ansprüche,
**dadurch gekennzeichnet, dass**
der elektrische Leiter (4) fest angeordnet ist.

6. Strömungsmaschine (1) nach einem der vorhergehenden Ansprüche,
**dadurch gekennzeichnet, dass**
der elektrische Leiter (4) senkrecht zu den Feldlinien des Magnetfeldes (B) angeordnet ist.

7. Strömungsmaschine (1) nach einem der vorhergehenden Ansprüche,
**dadurch gekennzeichnet, dass** ,
der elektrische Leiter (4) außerhalb des Strömungskanals (2) angeordnet ist.

8. Strömungsmaschine (1) nach Anspruch 7,
**dadurch gekennzeichnet, dass**
der elektrische Leiter (4) dem Strömungskanal (2) benachbart angeordnet ist.

9. Strömungsmaschine (1) nach einem der Ansprüche 7 oder 8,
**dadurch gekennzeichnet, dass**
der Abschnitt des Strömungskanals (2) von einer Oberfläche eines der Magnetpole (3a,3b) und einer Strömungsführungswand (6) festgelegt ist, die in einem Abstand zu der Oberfläche des anderen Magnetpols (3a,4b) liegt.

10. Strömungsmaschine (1) nach einem der vorhergehenden Ansprüche,
**dadurch gekennzeichnet, dass**
der Strömungskanal (2) langgestreckt und im Querschnitt ringförmig ausgebildet ist.

11. Strömungsmaschine (1) nach einem der vorhergehenden Ansprüche,
**dadurch gekennzeichnet, dass**
wenigstens einer der Pole des Magneten (3a,3b) über eine Feldwicklung (12) erzeugbar ist.

12. Strömungsmaschine (1) nach einem der vorhergehenden Ansprüche,
**dadurch gekennzeichnet, dass**
das Magnetfeld entlang einer Anfangseinströmungsrichtung (7) mindestens einen Vorzeichenwechsel aufweist.

13. Strömungsmaschine (1) nach einem der vorhergehenden Ansprüche,
**dadurch gekennzeichnet, dass**
der Strömungskanal (2) entlang der Anfangseinströmungsrichtung (7) aufgeweitet ist.

14. Strömungsmaschine (1) nach einem der vorhergehenden Ansprüche,
**gekennzeichnet durch**
eine Ionisierungseinrichtung zur Erzeugung von geladenen Teilchen im Aktionsfluid, die vor dem Abschnitt des Strömungskanals (2) angeordnet ist.

15. Strömungsmaschine (1) nach einem der der vorhergehenden Ansprüche,
**gekennzeichnet durch**
eine Rekombinationseinrichtung zur Rekombination von geladenen Teilchen im Aktionsfluid, die hinter dem Abschnitt des Strömungskanals (2) angeordnet ist.

16. Strömungsmaschine (1) nach einem der vorhergehenden Ansprüche,
**dadurch gekennzeichnet, dass**
der Magnet von einer mittels einer Feldwicklung (12) magnetisierbaren Begrenzungswand und einer gegenüberliegenden ferromagnetischen zweiten Begrenzungswand gebildet ist.

17. Strömungsmaschine (1) nach einem der vorhergehenden Ansprüche,
**dadurch gekennzeichnet, dass**
der Strömungskanal (2) als Strömungsrohr (18) zur Führung des Aktionsfluids vorgesehen ist.

18. Verfahren zum Betrieb einer Strömungsmaschine (1)
mit einem Strömungskanal (2), durch den ionenhaltiges Aktionsfluid strömt und durch ein im Strömungskanal (2) anliegendes Magnetfeld abgelenkt wird und ein elektrischer Leiter (4) derart angeordnet wird, dass bei einer zeitlichen Änderung des Magnetfeldes (B) am Ort des elektrischen Leiters (4) eine elektrische Spannung induziert wird.

19. Verfahren nach Anspruch 18,
**dadurch gekennzeichnet, dass**
der elektrische Leiter (4) fest installiert wird.

20. Verfahren nach Anspruch 18 oder 19,
**dadurch gekennzeichnet, dass**
das Aktionsfluid zwischen einer Begrenzungswand des Strömungskanals (2) und einer zwischen dem elektrischen Leiter (4) und der Begrenzungswand angeordneten Strömungsführungswand (6) strömt.

21. Verfahren nach einem der Ansprüche 18 bis 20,
**dadurch gekennzeichnet, dass**
im Strömungskanal (2) das auf die Ionen einwirkende Magnetfeld (B) derart erzeugt wird, dass beim Durchströmen des Strömungskanals (2) die tangentiale Geschwindigkeitskomponente des ionenhaltigen Aktionsfluids (A) gezielt beeinflusst wird.

22. Verfahren nach einem der Ansprüche 18 bis 21,
**dadurch gekennzeichnet, dass**
im Strömungskanal (2) ein radiales Magnetfeld (B), welches entlang der Strömungsrichtung des ionenhaltigen Aktionsfluids (A) alterniert, erzeugt wird.

23. Verfahren nach einem der Ansprüche 18 bis 22,
**dadurch gekennzeichnet, dass**
das Magnetfeld (B) zeitlich und/oder räumlich geregelt wird.

24. Verfahren nach einem der Ansprüche 18 bis 23,
**dadurch gekennzeichnet, dass**
das ionenhaltige Aktionsfluid (A) durch Ionisation von Teilchen im Aktionsfluid (A) vor Durchströmen des Strömungskanals (2) gebildet wird.

25. Verfahren nach einem der Ansprüche 18 bis 24,
**dadurch gekennzeichnet, dass**
Ionen durch Ionisation von Teilchen im Aktionsfluid während dem Durchströmen des Strömungskanals (2) gebildet werden.

26. Verfahren nach einem der Ansprüche 18 bis 25,
**dadurch gekennzeichnet, dass**
Ionen durch Stossionisation gebildet werden.

27. Verfahren nach einem der Ansprüche 18 bis 26,
**dadurch gekennzeichnet, dass**
Ionen durch Strahlungsionisation gebildet werden.

28. Verfahren nach einem der Ansprüche 18 bis 27,
**dadurch gekennzeichnet, dass**
in einem Rekombinationsprozess und/oder einem katalytischen Prozess das Aktionsfluid von schädigenden Substanzen gereinigt wird.

29. Verfahren nach einem der Ansprüche 18 bis 28,
**dadurch gekennzeichnet, dass**
die Reinigung während und/oder nach Durchströmen des Strömungskanals (2) durchgeführt wird.
